# EUROPÄISCHE PATENTSCHRIFT

(11) **EP 0 735 297 B1**
(45) Veröffentlichungstag und Bekanntmachung des Hinweises auf die Patenterteilung: **27.01.1999**
(21) Anmeldenummer: 96104519.2
(22) Anmeldetag: 21.03.1996
(51) Int. Cl.: F16H 21/48

(54) **Getriebevorrichtung**
Transmission device
Dispositif de transmission

(30) Priorität: 28.03.1995 DE 19511419
(43) Veröffentlichungstag der Anmeldung: 02.10.1996
(73) Patentinhaber: Kelling, Hermann-Josef, 82337 Penzberg (DE)
(72) Erfinder: Kelling, Hermann-Josef, 82337 Penzberg (DE)
(74) Vertreter: Kohlmann, Karl Friedrich, Dipl.-Ing.

(56) Entgegenhaltungen:
- DE-A- 3 811 828
- FR-A- 905 241
- GB-A- 2 015 362
- US-A- 3 289 484

## Beschreibung

Die Erfindung betrifft eine Getriebevorrichtung nach dem Oberbegriff des Patentanspruchs 1.

Eine Getriebevorrichtung, bei der die Kopplungseinrichtung durch eine fliegende lagerung eines Kurbelzapfens gebildet ist; ist beispielsweise aus der DE 72 14 594 U1 bekannt. Weiterhin ist aus der DE 26 46 026 C2 eine Getriebevorrichtung mit einem in einem Gehäuse um eine erste Drehachse drehbar gelagerten Schwungrad und mit einem Kupplungselement bekannt, das im Schwungrad relativ zu diesem um eine zweite Drehachse drehbar gelagert ist, wobei die erste Drehachse und die zweite Drehachse sich unter einem spitzen Winkel in einem gemeinsamen Schnittpunkt schneiden. Ferner ist das Kupplungselement bei dieser bekannten Getriebevorrichtung an seinem freien Ende über ein Gelenk derart mit einer Abtriebswelle gekoppelt, daß diese Abtriebswelle eine oszillierende Bewegung um ihre Längsachse ausführt.

Eine Getriebevorrichtung mit den Merkmalen des Oberbegriffes des Patentanspruchs 1 ist aus der FR-A-905 241 bekannt. Die hieraus bekannte Getriebevorrichtung dient zur Bewegungsübertragung durch eine abgedichtete Wand. Bei der hieraus bekannten Getriebevorrichtung wird nicht darauf abgezielt, eine Drehbewegung in eine translatorische Bewegung umzusetzen.

Eine sehr ähnliche Getriebevorrichtung für eine flüssigkeitsdichte Bewegungsübertragung durch eine Wand hindurch ist ebenso aus der US-A-3 289 484 bekannt. Diese bekannte Vorrichtung zielt darauf ab, ein biegsames zylindrisches Membranelement, das an der Position eines zweiten Drehkörpers vorgesehen ist, durch die bei der Drehung gleichbleibende Orientierung im Betrieb lediglich auf Biegung zu beanspruchen und nicht auf Torsion. Ein Hinweis auf die Umsetzung einer rotatorischen in eine translatorische Bewegung ist hierin nicht gegeben.

Der Erfindung liegt die Aufgabe zugrunde, eine gattungsgemäße Getriebevorrichtung derart weiterzubilden, daß mit ihr bei einfacher und zuverlässiger konstruktiver Ausbildung vielfältige Arbeitseinrichtungen durch Umsetzung einer rotatorischen in eine einstellbare translatorische Bewegung und umgekehrt antreibbar sind.

Diese Aufgabe wird erfindungsgemäß von einer Getriebevorrichtung mit den Merkmalen des Patentanspruches 1 gelöst.

Durch die Ausbildung der Kopplungseinrichtung als Zahnradgetriebeanordnung wird insbesondere der Vorteil erzielt, daß zwischen dem ersten Drehkörper und dem zweiten Drehkörper eine formschlüssige Verbindung besteht, die eine schlupffreie Übertragung des auf die erste Drehachse übertragenen Drehmomentes auf die zweite Drehachse und umgekehrt ermöglicht. Die Übertragung einer translatorischen Bewegung, in die die rotatorische Bewegung eines Antriebsaggregates durch die Verwendung der erfindungsgemäßen Getriebevorrichtung umgesetzt werden kann, erfolgt dadurch, daß der zweite Drehkörper zumindest ein Element aufweist, das sich in einer Richtung quer zur zweiten Drehachse von dieser wegerstreckt. Um eine translatorische Bewegung mit einstellbarem Hub ausführen zu können, sieht die Erfindung vor, an dem Element des zweiten Drehkörpers mindestens ein Verschiebeelement anzuordnen, das in seinem Abstand zur zweiten Drehachse verschiebbar ist. Vorzugsweise weist die Zahnradgetriebeanordnung ein erstes gehäusefestes Zahnrad und ein mit diesem in Eingriff stehendes zweites, drehfest mit dem zweiten Drehkörper verbundenes Zahnrad auf. Beide Zahnräder können sowohl gleiche als auch unterschiedliche Zähne zahlen aufweisen, so daß entsprechend dem Übersetzungsverhältnis eine Drehbewegung des zweiten Drehkörpers relativ zur Drehbewegung des ersten Drehkörpers resultiert. Bei dieser Ausgestaltung dreht sich der zweite Drehkörper in gleicher Richtung wie der erste Drehkörper, so daß z.B. bei gleicher Zähnezahl der beiden Zahnräder der zweite Drehkörper bei einer vollen Umdrehung des ersten Drehkörpers zwei volle Umdrehungen vollführt.

Eine Weiterbildung dieser Ausgestaltung sieht vor, daß ein das erste und das zweite Zahnrad verbindendes Zwischen-Zahnrad vorgesehen ist. Diese Ausgestaltung hat insbesondere den Vorteil, daß bei Verwendung einer gleichen Zähnezahl des ersten und zweiten Zahnrades sich die Grunddrehung des ersten Drehkörpers und die überlagerte Drehung des zweiten Drehkörpers relativ zum ersten Drehkörper derart kompensieren, daß der zweite Drehkörper bezogen auf die Gehäuseeinrichtung keine Rotation um seine Drehachse vollzieht.

Die Zahnräder der Zahnradgetriebeanordnung sind vorzugsweise als Kegelräder ausgebildet, mit denen eine sichere Drehmomentenübertragung bei zueinander im Winkel angeordneten Drehachsen gewährleistet ist.

Die Lagerstellen entlang der zweiten Drehachse können bei der erfindungsgemäßen Getriebevorrichtung relativ zu dem gemeinsamen Schnittpunkt der ersten und der zweiten Drehachse unterschiedlich angeordnet sein. Entweder sind die zumindest zwei Lagerstellen entlang der zweiten Drehachse auf der gleichen Seite bezüglich des gemeinsamen Schnittpunktes der ersten und der zweiten Drehachse angeordnet oder entlang der zweiten Drehachse ist jeweils zumindest eine Lagerstelle auf jeder der beiden Seiten bezüglich des gemeinsamen Schnittpunktes der ersten und der zweiten Drehachse angeordnet. Alternativ kann auch vorgesehen sein, daß eine Lagerstelle entlang der zweiten Drehachse im gemeinsamen Schnittpunkt der ersten und der zweiten Drehachse angeordnet ist. Die Anordnung der Lagerstellen relativ zum Schnittpunkt der beiden Drehachsen kann je nach Anwendungsfall der erfindungsgemäßen Vorrichtung zweckmäßig gewählt werden.

Vorzugsweise liegt zumindest ein Teil des Elements in der Ebene, die senkrecht zur zweiten Drehachse durch den gemeinsamen Schnittpunkt der ersten und der zweiten Drehachse verläuft. In einer günstigen Ausgestaltung ist das Element als senkrecht zur zweiten Drehachse angeordnete Scheibe ausgebildet, wobei die Scheibe durch den gemeinsamen Schnittpunkt der beiden Drehachsen oder außerhalb davon verlaufen kann. Alternativ kann sich das Element aber auch unter einem spitzen Winkel zur zweiten Drehachse von dieser wegerstrecken, wobei wiederum ein Teil des Elementes in der senkrecht zur zweiten Drehachse durch den gemeinsamen Drehachsenschnittpunkt verlaufende Ebene liegen kann. Je nach der gewählten Anordnung und Ausbildung des sich quer zur zweiten Drehachse von dieser wegerstreckenden Elementes des zweiten Drehkörpers ergeben sich unterschiedliche Bewegungsbahnen der auf dem Element befindlichen Punkte, die für vielfältige Arbeitseinrichtungen genutzt oder von Antriebseinrichtungen angetrieben werden können.

Beispielsweise kann an dem Element ein Schlitten oder dergleichen angeordnet sein, der entlang des Elements auf die Drehachse zu- oder von dieser weggeschoben werden kann. Durch die Verschiebung des Schlittens wird der Hub größer oder kleiner, wobei zwischen der Verschiebung und dem Hub eine Proportionalität besteht. Eine derartige Ausgestaltung kann beispielsweise bei Kolbenpumpen, Taumelpressen usw. Verwendung finden.

Die vorangehend beschriebene Getriebevorrichtung kann in vielfältiger Weise insbesondere zur Umsetzung einer rotatorischen in eine translatorische Bewegung eingesetzt werden. Beispielsweise kann der zweite Drehkörper mit einem Rührelement versehen sein. Es ist aber auch denkbar, daß der zweite Drehkörper mit einem flossenartigen Element versehen ist, mit dem beispielsweise eine Paddelbewegung in einer Flüssigkeit, z.B. als Antrieb für ein Wasserfahrzeug ausgeführt werden kann.

Schließlich ist es erfindungsgemäß günstig, wenn der zweite Drehkörper einen als Welle ausgebildeten Grundkörper umfaßt, an dem dann z.B. eine Scheibe oder ein anderweitiges Element zur weiteren Bewegungsübertragung angeordnet ist.

Im folgenden ist zum besseren Verständnis ein Ausführungsbeispiel der Erfindung unter Bezugnahme auf die bezeichneten Darstellungen näher beschrieben.
- Figur 1: zeigt eine geschnitten dargestellte Seitenansicht eines Ausführungsbeispiels der erfindungsgemäßen Getriebevorrichtung;
- Figur 2: zeigt einen Schnitt der Getriebevorrichtung gemäß Figur 1 entlang der Ebene III-III in Figur 1.

In einem Gehäuse 1 ist ein erster Drehkörper 2 über Lager 3 und 11 drehbar gelagert. Der Drehkörper 2 besteht aus einem Wellenabschnitt 33 und einem sich koaxial daran anschließenden Trommelkörper 10. Der Wellenabschnitt 33 ist an seinem freien, aus dem Gehäuse 1 herausragenden Ende mit einer Nut 4 versehen, in die beispielsweise eine Paßfeder einsetzbar ist, über welche der Drehkörper 2 an ein (nicht dargestelltes) Antriebsaggregat angeschlossen werden kann.

Der Drehkörper 2 durchgreift eine Öffnung 5 in einem Deckel 6, welcher mit dem Gehäuse 1 über Schrauben 7 verbunden ist.

Am Deckel 6 ist ein als Kegelrad ausgebildetes Zahnrad 8 angeordnet, welches mit einem Zwischen-Zahnrad 9 kämmt.

Der Drehkörper 2 nimmt in einer Öffnung 13 des Trommelkörpers 10 einen zweiten Drehkörper 14 auf, der als Welle ausgebildet ist. Der zweite Drehkörper 14 ist mittels zweier beabstandeter Lager 15 und 16 drehbar im Trommelkörper 10 und damit im ersten Drehkörper 2 gelagert, wobei die Drehachse 12 des ersten Drehkörpers 2 mit der Drehachse 18 des zweiten Drehkörpers 14 einen Winkel α einschließt und sich die beiden Drehachsen 12, 18 in einem gemeinsamen Schnittpunkt 19 schneiden, der außerhalb des Trommelkörpers 10 liegt.

Im Bereich des Schnittpunktes 19 ist ein Taumelelement 20 dreh- und axialfest am wellenförmigen Drehkörper 14 angebracht. Das gegenüberliegende freie Ende des wellenförmigen Drehkörpers 14 trägt ein als Kegelrad ausgebildetes Zahnrad 17, welches mit dem Zwischen-Zahnrad 9 kämmt.

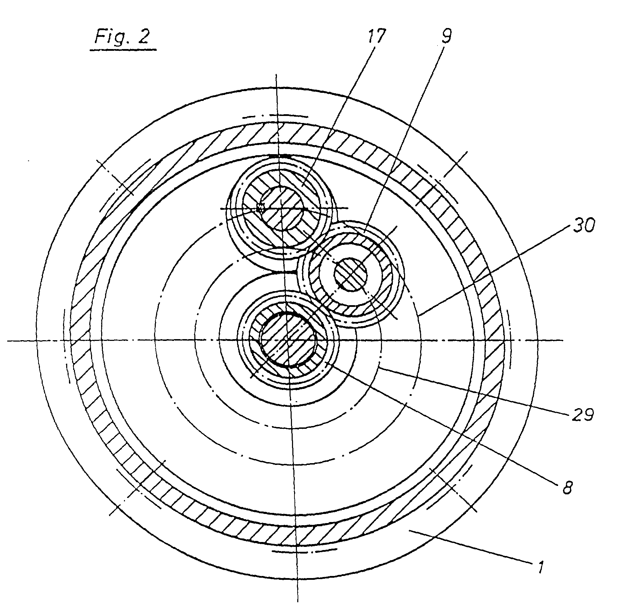

Aus der Schnittansicht in Fig. 2 läßt sich die Anordnung der Zahnräder 8, 9 und 17 zueinander entnehmen. Mit den Bezugszeichen 29 und 30 sind die Umlaufbahnen der Zahnräder 9 und 17 angedeutet.

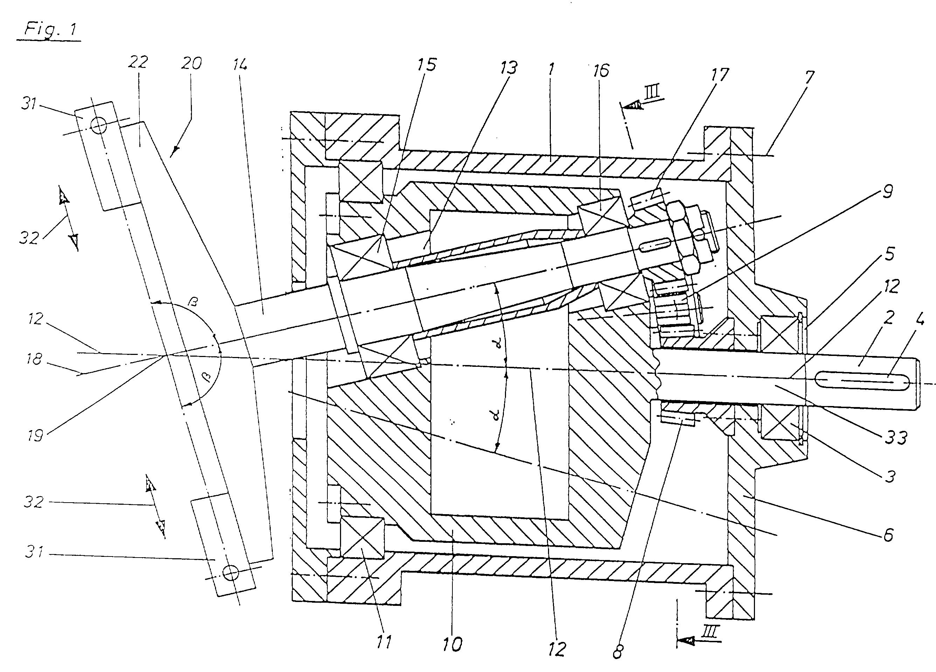

Wird bei der vorangehend, anhand der Fig. 1 und 2 beschriebenen Getriebevorrichtung der erste Drehkörper 2 rotatorisch angetrieben, wird der zweite Drehkörper 14 über den Trommelkörper 10 zunächst bei dieser Drehung mitgenommen. Da sich jedoch dabei das Zahnrad 17 des zweiten Drehkörpers 14 über das Zwischen-Zahnrad 9 am gehäusefesten Zahnrad 8 abwalzt, vollführt der zweite Drehkörper 14 eine Gegendrehung, um seine Längsachse 18, die sich mit der Grundbewegung des Trommelkörpers 10 überlagert. Durch eine gleiche Zähnezahl und Zahnteilung der Zahnräder 8 und 17 wird erreicht, daß der zweite Drehkörper 14 sich im Verlaufe einer vollen Umdrehung des Trommelkörpers 10 genau einmal um seine Längsachse 18 in gegenläufiger Richtung dreht. Bezogen auf ein gehäusefestes Bezugssystem kompensieren sich also die beiden gegenläufigen Drehbewegungen derart, daß der zweite Drehkörper 14 eine Eigenrotation um seine Längsachse 18 ausführt, d.h. bezüglich des Gehäuses 1 nur translatorisch bewegt wird, und zwar auf einer Kegeloberfläche, deren Kegelspitze als Fixpunkt im gemeinsamen Schnittpunkt 19 der beiden Drehachsen 12, 18 liegt.

Der zweite Drehkörper 14 ist im Ausführungsbeispiel an seinem nahe dem gemeinsamen Schnittpunkt 19 der Drehachsen des ersten und zweiten Drehkörpers gelegenen freien Ende als Scheibe 22 ausgebildet, die wiederum ein Taumelelement 20 darstellt. Die Scheibe 22 erstreckt sich in einer unter dem Winkel β (hier β = 90°) zur Drehachse 18 des zweiten Drehkörpers 14 verlaufenden Ebene. Die Scheibe 22 ist mit zwei radial verschiebbaren Schlitten 31 versehen, deren Verschieberichtung in Fig. 1 durch Pfeile 32 angedeutet ist. Durch Verschieben der Schlitten 31 in Richtung der Pfeile 32 kann der Hub der Bewegung der an der Scheibe 22 befestigten Schitten 31, der in Richtung parallel zu Drehachse 12 vorliegt, verstellt werden. Eine derartige Ausführungsform ist beispielsweise zur Verwendung der Getriebevorrichtung bei Kolbenpumpen, Taumelpressen, Kolbenmotoren oder dergleichen einsetzbar.

Die erfindungsgemäße Getriebevorrichtung ist darüber hinaus für eine Vielzahl von weiteren Arbeitseinrichtungen verwendbar, beispielsweise in Verbindung mit einem Rührelement zum Einsatz in einem Rührwerk. In diesem Fall kann der Drehkörper 14 beispielsweise als Hohlwelle ausgebildet sein, in deren Innenraum bei Bedarf Leitungen angeordnet sein können, die beispielsweise über Schläuche zum Gehäuse geführt sein können, um die Zu- und/oder Abfuhr von Medien zum Rührwerk hin bzw. von diesem weg vornehmen zu können.

## Patentansprüche

1. Getriebevorrichtung mit
- einem ersten Drehkörper (2), der in oder an einer Gehäuseeinrichtung (1) um eine erste Drehachse (12) drehbar gelagert ist,
- einem zweiten Drehkörper (14), der im oder am ersten Drehkörper (2) relativ zum ersten Drehkörper (2) um eine zweite Drehachse (18) drehbar gelagert ist, wobei der erste Drehkörper (2) zur Lagerung des zweiten Drehkörpers (14) zumindest zwei beabstandete Lagerstellen (15, 16) aufweist, und wobei die erste Drehachse (12) und die zweite Drehachse (18) sich unter einem spitzen Winkel (α) in einem gemeinsamen Schnittpunkt (19) schneiden, und
- einer Kopplungseinrichtung (8, 9, 17), mit der der zweite Drehkörper (14) in seiner Relativbewegung zum ersten Drehkörper (2) festgelegt wird und die als Zahnradgetriebeanordnung (8, 9, 17) zwischen dem zweiten Drehkörper (14) und der Gehäuseeinrichtung (1) ausgebildet ist,
**dadurch gekennzeichnet, daß**
- der zweite Drehkörper (14) zumindest ein Element (20) aufweist, das sich in eine Richtung quer zur zweiten Drehachse (18) von dieser wegerstreckt, und
- an dem Element (20) zumindest ein Verschiebeelement (31) angeordnet ist, das in seinem Abstand zur zweiten Drehachse (18) verschiebbar ist.

2. Getriebevorrichtung nach Anspruch 1,
**dadurch gekennzeichnet, daß** die Zahnradgetriebeanordnung ein erstes gehäusefestes Zahnrad (8) und ein mit diesem in Eingriff stehendes zweites, drehfest mit dem zweiten Drehkörper (14) verbundenes Zahnrad (17) aufweist.

3. Getriebevorrichtung nach Anspruch 2,
**dadurch gekennzeichnet, daß** ein das erste und das zweite Zahnrad (8, 17) verbindendes Zwischen-Zahnrad (9) vorgesehen ist.

4. Getriebevorrichtung nach Anspruch 2 oder 3,
**dadurch gekennzeichnet, daß** das erste Zahnrad (8) und das zweite Zahnrad (17) jeweils die gleiche Zähnezahl aufweisen.

5. Getriebevorrichtung nach einem der Ansprüche 1 bis 4,
**dadurch gekennzeichnet, daß** die Zahnräder (8, 9, 17) als Kegelränder ausgebildet sind.

6. Getriebevorrichtung nach einem der Ansprüche 1 bis 5,
**dadurch gekennzeichnet, daß** die zumindest zwei Lagerstellen (15, 16) entlang der zweiten Drehachse (18) auf der gleichen Seite bezüglich des gemeinsamen Schnittpunkts (19) der ersten und der zweiten Drehachse (12, 18) angeordnet sind.

7. Getriebevorrichtung nach einem der Ansprüche 1 bis 5,
**dadurch gekennzeichnet, daß** eine Lagerstelle entlang der zweiten Drehachse (18) im gemeinsamen Schnittpunkt (19) der ersten und der zweiten Drehachse (12, 18) angeordnet ist.

8. Getriebevorrichtung nach einem der Ansprüche 1 bis 5,
**dadurch gekennzeichnet, daß** entlang der zweiten Drehachse (18) jeweils zumindest eine Lagerstelle auf jeder der beiden Seiten bezüglich des gemeinsamen Schnittpunkts (19) der ersten und der zweiten Drehachse (12, 18) angeordnet ist.

9. Getriebevorrichtung nach Anspruch 1,
**dadurch gekennzeichnet, daß** zumindest ein Teil des Elementes (20) in der Ebene liegt, die senkrecht zur zweiten Drehachse (18) durch den gemeinsamen Schnittpunkt (19) der ersten und der zweiten Drehachse (12, 18) verläuft.

10. Getriebevorrichtung nach Anspruch 1 oder 9,
**dadurch gekennzeichnet, daß** das Element (20) als Scheibe (22) senkrecht zur zweiten Drehachse (18) ausgebildet ist.

11. Getriebevorrichtung nach Anspruch 1 oder 9,
**dadurch gekennzeichnet, daß** das Element (20) sich unter einem spitzen Winkel zur zweiten Drehachse (18) von dieser wegerstreckt.

12. Getriebevorrichtung nach einem der Ansprüche 1 bis 11,
**dadurch gekennzeichnet, daß** der zweite Drehkörper (14) mit einem Rührelement versehen ist.

13. Getriebevorrichtung nach einem der Ansprüche 1 bis 11,
**dadurch gekennzeichnet, daß** der zweite Drehkörper (14) mit einem flossenartigen Element versehen ist.

14. Getriebevorrichtung nach einem der Ansprüche 1 bis 13,
**dadurch gekennzeichnet, daß** der zweite Drehkörper einen als Welle ausgebildeten Grundkörper umfaßt.

## Claims

1. Transmission device with
- a first rotating body (2) which is mounted in or on a housing device (1) so as to be rotatable around a first rotational axis (12),
- a second rotating body (14) which is mounted in or on the first rotating body (2) so as to be rotatable around a second rotational axis (18) relative to the first rotating body (2), the first rotating body (2) having at least two spaced-out bearing points (15, 16) for bearing the second rotating body (14), and the first rotational axis (12) and the second rotational axis (18) intersecting at an acute angle (α) in a common intersection point (19), and
- a coupling device (8, 9, 17) by means of which the second rotating body (14) is fixed in its movement relative to the first rotating body (2) and which is configured as a toothed gearing arrangement (8, 9, 17) between the second rotating body (14) and the housing device (1),
**characterised in that**
- the second rotating body (14) has at least one element (20) which extends in a direction transverse to the second rotational axis (18) and away from same, and
- there is arranged on the element (20) at least one shifting element (31) which may be shifted in its distance from the second rotational axis (18).

2. Transmission device according to claim 1, **characterised in that** the toothed gearing arrangement has a first toothed wheel (8) fixed to the housing and a second toothed wheel (17) engaging with said first toothed wheel and non- rotatably connected to the first rotating body (14).

3. Transmission device according to claim 2, **characterised in that** an intermediate toothed
wheel (9) is provided connecting the first and second
toothed wheels (8, 17).

4. Transmission device according to claim 2 or 3, **characterised in that** the first toothed wheel (8) and the second toothed wheel (17) each have the same number of teeth.

5. Transmission device according to one of claims 1 to 4, **characterised in that** the toothed wheels (8, 9, 17) are configured as bevel wheels.

6. Transmission device according to one of claims 1 to 5, **characterised in that** the at least two bearing points (15, 16) are disposed along the second rotational axis (18) on the same side in relation to the common intersection point (19) of the first and second rotational axes (12, 18).

7. Transmission device according to one of claims 1 to 5, **characterised in that** one bearing point is disposed along the second rotational axis (18) in the common intersection point (19) of the first and second rotational axes (12, 18).

8. Transmission device according to one of claims 1 to 5, **characterised in that** along the second rotational axis (18) respectively at least one bearing point is disposed on each of the two sides in relation to the common intersection point (19) of the first and second rotational axes (12, 18).

9. Transmission device according to claim 1, **characterised in that** at least a portion of the element (20) lies in the plane which runs perpendicular to the second rotational axis (18) through the common intersection point (19) of the first and second rotational axes (12, 18).

10. Transmission device according to claim 1 or 9, **characterised in that** the element (20) is configured as a disk (22) perpendicular to the second rotational axis (18).

11. Transmission device according to claim 1 or 9, **characterised in that** the element (20) extends away from the second rotational axis (18) at an acute angle to same.

12. Transmission device according to one of claims 1 to 11, **characterised in that** the second rotating body (14) is provided with an agitating member.

13. Transmission device according to one of claims 1 to 11, **characterised in that** the second rotating body (14) is provided with a fin-like member.

14. Transmission device according to one of claims 1 to 13, **characterised in that** the second rotating body incorporates a basic body configured as a shaft.

## Revendications

1. Dispositif de transmission comportant
- un premier corps rotatif (2), monté dans ou sur un élément de carter (1), de façon à pouvoir tourner autour d'un premier axe de rotation (12),
- un deuxième corps rotatif (14), monté à rotation dans ou sur le premier corps rotatif (2), de façon à pouvoir tourner par rapport au premier corps rotatif (2), autour d'un deuxième axe de rotation (18), le premier corps rotatif (2) présentant, pour le tourillonnement du deuxième corps rotatif (14), au moins deux points de tourillonnement (15, 16) espacés, et où le premier axe de rotation (12) et le deuxième axe de rotation (18) se coupent, sous un angle aigu (α), en un point d'intersection (19) commun, et
- un dispositif d'accouplement (8, 9, 17), à l'aide duquel est fixé le deuxième corps rotatif (14) dans son deplacement relatif par rapport au premier corps rotatif (2) et qui est réalisé sous forme de mécanisme de transmission à roues dentées (8, 9, 17), entre le deuxième corps rotatif (14) et l'élément de carter (1),
caractérisé en ce que
- le deuxième corps rotatif (14) présente au moins un élément (20) qui s'étend dans une direction transversale par rapport au deuxième axe de rotation (18), en s'écartant de celui-ci, et
- sur l'élément (20), est disposé au moins un élément coulissant (31), susceptible de coulisser en gardant son espacement, par rapport au deuxième axe de rotation (18).

2. Dispositif de transmission selon la revendication 1, caractérisé en ce que le mécanisme de transmission à roue dentée présente une première roue dentée (8) fixe par rapport au carter et une deuxième roue dentée (17) s'engrenant avec celle-ci, reliée, de façon assujettie à rotation, au deuxième corps rotatif (14).

3. Dispositif de transmission selon la revendication 2, caractérisé en ce qu'est prévue une roue dentée intermédiaire (9) reliant la première et la deuxième roue dentée (8, 17).

4. Dispositif de transmission selon la revendication 2 ou 3, caractérisé en ce que la première roue dentée (8) et la deuxième roue dentée (17) présentent chacune le même nombre de dents.

5. Dispositif de transmission selon l'une des revendications 1 à 4, caractérisé en ce que les roues dentées (8, 9, 17) sont réalisées sous forme de roues coniques.

6. Dispositif de transmission selon l'une des revendications 1 à 5, caractérisé en ce que les au moins deux points de tourillonnement (15, 16) sont disposés le long du deuxième axe de rotation (18), du même côté par rapport au point d'intersection (19) commun du premier et du deuxième axe de rotation (12, 18).

7. Dispositif de transmission selon l'une des revendications 1 à 5, caractérisé en ce qu'un point de tourillonnement est disposé le long du deuxième axe de rotation (18), au point d'intersection (19) commun du premier et du deuxième axe de rotation (18, 19).

8. Dispositif de transmission selon l'une des revendications 1 à 5, caractérisé en ce que le long du deuxième axe de rotation (18) est chaque fois disposé au moins un point de tourillonnement sur chacun des deux côtés par rapport au point d'intersection (19) commun du premier et du deuxième axe de rotation (12, 18).

9. Dispositif de transmission selon la revendication 1, caractérisé en ce qu'au moins une partie de l'élément (20) est situé dans le plan s'étendant perpendiculairement par rapport au deuxième axe de rotation (18), passant par le point d'intersection (19) commun du premier et du deuxième axe de rotation (12, 18).

10. Dispositif de transmission selon la revendication 1 ou 9, caractérisé en ce que l'élément (20) est réalisé sous forme de disque (22), perpendiculaire au deuxième axe de rotation (18).

11. Dispositif de transmission selon la revendication 1 ou 9, caractérisé en ce que l'élément (20) s'étend en faisant un angle aigu par rapport au- deuxième axe de rotation (18), en s'écartant de celui-ci.

12. Dispositif de transmission selon l'une des revendications 1 à 11, caractérisé en ce que le deuxième corps rotatif (14) est doté d'un élément agitateur.

13. Dispositif de transmission selon l'une des revendications 1 à 11, caractérisé en ce que le deuxième corps rotatif (14) est doté d'un élément du genre d'un empennage.

14. Dispositif de transmission selon l'une des revendications 1 à 13, caractérisé en ce que le deuxième corps rotatif comprend un corps de base réalisé sous forme d'arbre.
